# EUROPÄISCHE PATENTANMELDUNG

(11) **EP 0 749 679 A1**
(43) Veröffentlichungstag der Anmeldung: **27.12.1996**
(21) Anmeldenummer: 96107636.1
(22) Anmeldetag: 14.05.1996
(51) Int. Cl.: A01D 34/64

(54) **Trägervorrichtung für Mähwerke**

(30) Priorität: 21.06.1995 DE 29509661 U
(71) Anmelder: H. Niemeyer Söhne GmbH & Co. KG, D-48466 Hörstel (DE)
(72) Erfinder: Ungruh, Josef, 48429 Rheine (DE); Kamphus, Ludger, 48496 Hopsten (DE); Tebbenhoff, Hermann, 48496 Hopsten (DE)

(57) **Zusammenfassung**

Die Erfindung betrifft eine Trägervorrichtung für Mähwerke bestehend aus einer Deichsel (3) mit frontseitigem Anbaubock (2) zum Anschluß an einen Traktor (1) und einem Tragteil mit Fahrgestell, wobei die Trägervorrichtung (4) mit einer von einem Front- oder Heckanbau-Mähwerk oder der Grundkomponente eines solchen Mähwerkes gebildeten Mähgerät (10) zu einem Anhängemähwerk zusammenfügbar ist.

## Beschreibung

Die Erfindung bezieht sich auf eine Trägervorrichtung für Mähwerke gemäß dem Oberbegriff des Anspruchs 1.

Aus der DE 40 19 948 A1 ist eine Trägervorrichtung für Anhängemähwerke bekannt, die frontseitig durch einen Anbaubock mit dem Traktor verbindbar ist und ein Tragteil mit Fahrgestell aufweist, in die die einzelnen Teile des Mähgerätes fest integriert sind.

Aufgabe der Erfindung ist es, mit einfachen Mitteln eine vielseitige Trägervorrichtung für Mähwerke zu schaffen.

Zur Lösung dieser Aufgabe zeichnet sich die Trägervorrichtung der eingangs genannten Art durch die im kennzeichnenden Teil des Anspruchs 1 angegebenen Merkmale aus.

Hinsichtlich weiterer, wesentlicher Ausgestaltungen der Erfindung wird auf die Ansprüche 2 bis 22 verwiesen.

Die Trägervorrichtung nach der Erfindung ist in vorteilhafter Weise geeignet, die vielseitige Verwendbarkeit von Mähgeräten, wie Front- oder Heckanbaumähwerken oder Grundkomponenten eines solchen Mähwerkes zu ermöglichen. So kann beispielsweise ein komplettes Frontmähwerk mit der Trägervorrichtung verbunden werden, wodurch ein Anhängemähwerk entsteht ohne Nachteile in Kauf nehmen zu müssen. Der Hersteller kann durch die vielseitige Verwendbarkeit von kompletten Mähwerken oder Modulen davon, die Stückzahlen erhöhen und dadurch preiswerter produzieren. Ferner kann er beispielsweise für die Lieferung von Anhängemähwerke kurzfristiger disponieren. Alle diese Maßnahmen führen zu einer kostengünstigen Fertigung.

Die Trägervorrichtung weist in ihrem unteren Teil in vorteilhafter Weise mehrere Anschlußmöglichkeiten auf, so daß sowohl Scheibenmähwerke als auch Trommelmähwerke mit der Trägervorrichtung kombiniert werden können.

Ein weiterer Vorteil ist, daß die Koppelpunkte als Dreipunktanlenkung und/oder wahlweise mit Schnellkuppelvorrichtung versehen sind, damit ein schneller, problemloser Anbau möglich ist.

Die erforderliche Winkelverstellung für das Mähgerät kann auf verschiedene Arten durchgeführt werden, beispielsweise durch eine mechanische Verstellung oder durch einen hydraulisch stufenlos verstellbaren Oberlenker. Die mechanische Ausführung wirkt über ein Winkelgestänge in Verbindung mit einer Handkurbel auf den Oberlenker.

Nach der Erfindung ist es möglich, die Höheneinstellung beispielsweise durch einen fernbedienbaren etwa vertikal angeordneten hydraulischen Stellzylinder vorzunehmen, der mit den entsprechenden Mähgerätführungen zusammenwirkt, wenn eine zum Boden parallele Verstellung gewünscht wird oder das Mähgerät zum Transport angehoben werden soll.

Die Erfindung sieht ferner vor, daß die Stützräder höheneinstellbar angeordnet sein können, um die Arbeitshöhe des Mähgerätes über die Stützräder vorzunehmen. Diese Höhenverstellung kann ebenfalls über fernsteuerbare hydraulische Stellzylinder in Verbindung mit den Stützrädern bedienungsfreundlich sein.

Die Trägervorrichtung stützt sich an ihrem Ende über steuerbare Stützräder auf dem Boden ab. Die Stützräder sind in vorteilhafter Weise um Hochachsen schwenkbar und über einen hydraulischen Stellzylinder fernbedienbar. Dadurch kann der Traktorfahrer beispielsweise bei der Arbeit in Hanglagen gegensteuern, um ein Abdriften des Anhängemähwerkes zu verhindern.

Die Stützräder sind verriegelbar, so daß zum Beispiel für den Straßentransport, wenn der Anhängemäher mittig hinter dem Traktor gefahren wird, ein problemloser Nachlauf abgesichert ist.

Nach der Erfindung ist der hydraulische Stellzylinder für die Verstellung der Lenkung der Stützräder beispielsweise ein preisgünstiger, einfachwirkender Stellzylinder mit Hydrospeicher.

Die Deichsel der Trägervorrichtung ist einerseits gelenkig mit dem Rahmen der Trägervorrichtung und andererseits gelenkig mit dem Anbaubock verbunden. Dabei ist das hintere Gelenk höher als das anbaubockseitige Gelenk angeordnet. Dies schafft einen besonders großen Freiraum unterhalb des Tragteils und dem Rahmen: Außerdem wird dadurch die Anbauhöhe des Anbaubockes an die Verbindungseinrichtungen zum Traktor günstig beeinflußt.

Das hintere Gelenk wird durch eine Stellvorrichtung zwischen Deichsel und Rahmen überbrückt. Diese Stellvorrichtung ist vorzugsweise ein stufenlos einstellbarer doppeltwirkender hydraulischer Zylinder. Zum Transport des Anhängemähwerks kann dieses Gelenk auch mechanisch verriegelt werden, um eine besonders hohe Sicherheit beim Straßentransport zu erreichen. Durch die Betätigung dieses Stellzylinders wird die Trägervorrichtung mit dem Mähgerät in die jeweilige Arbeitsposition rechts oder links vom Traktor geschwenkt. Für den Straßentransport nimmt es vorzugsweise eine Mittelstellung ein.

Das anbaubockseitige Gelenk besteht im wesentlichen aus zwei Teilgelenken mit angenähert vertikalen, parallelen Achsen, die durch Laschen oberhalb und unterhalb des Deichselendes miteinander verbunden sind. Die Teilgelenke werden durch zwei im Eingriff stehende Zahnsegmente gesteuert. Die Zahnsegmente sind nach der Erfindung in vorteilhafter Weise jeweils fest mit dem Anbaubock bzw. der Deichsel verbunden und die Zahnsegmentachsen fallen mit den Achsen der Teilgelenke zusammen. Vorzugsweise trägt die untere Verbindungslasche zwischen den Teilgelenken die Lagerung für einen Durchtrieb, an dem beidseitig die Gelenkwellen anschließbar sind, die das Mähgerät vom Traktor aus antreiben. Die Zahnsegmente bewirken, daß bei Winkelveränderungen zwischen Anbaubock und Deichsel, beispielsweise bei Kurvenfahrt des Traktors, im Übergangsbereich zwischen der traktorseitigen Gelenkwelle und der geräteseitigen Gelenkwelle keine zu starken Abwinklungen auftreten können, da der wirksam werdende Winkel für die Gelenkwellen - Kreuzgelenke lediglich halb so groß ist, wie die Abwinklung zwischen der Fahrtrichtung und der Deichsellängsachse.

Bei der Transportfahrt bewirken die im Eingriff stehenden Zahnsegmente zudem einen besseren Nachlauf des Anhängemähwerks zum Traktor.

Aus Sicherheitsgründen sind die Zahnsegmente abgedeckt, beispielsweise durch sich überlappende Scheiben, wobei nach der Erfindung sichergestellt ist, daß kein Schereffekt an der Schnittstelle der beiden Scheiben entsteht. Weitere Schutzmaßnahmen in diesem Bereich sind möglich.

Die Erfindung sieht ferner vor, daß das Mähgerät in Arbeitsstellung durch einstellbare Kraftspeicher entlastbar ist, so daß während der Arbeit eine besonders gute Abtastung der Bodenoberfläche möglich wird, und die Grasnarbe geschont wird.

Das Grundmodul kann nach der Erfindung eine wahlweise als Teil eines Front- oder Heckanbaumähwerks einsetzbare Ausbildung aufweisen. Es ist nach der Erfindung also in vorteilhafter Weise möglich, das Grundmodul an mehreren Mähgeräten zu verwenden, was besonders preisgünstig ist.

Für das als Frontmähwerk ausgebildete Mähgerät ist vorgesehen, das Winkelgetriebe mit einem Durchtrieb zu versehen, so daß die Verwendung des Mähwerkes als Frontgerät oder in Verbindung mit der Trägervorrichtung als Anhängegerät problemlos möglich ist.

Die Erfindung sieht vor, daß die Deichsel mit dem geräteseitigen Gelenk mittig zur Trägervorrichtung angeordnet ist. Es ist jedoch nach der Erfindung auch möglich, diesen Anschluß einseitig vorzusehen, wenn das Anhängemähwerk beispielsweise nur auf einer Seite vom Traktor arbeiten soll.

Weitere Merkmale und Vorteile der Erfindung ergeben sich aus der nachfolgenden Beschreibung und den Zeichnungen, in denen ein Ausführungsbeispiel einer Trägervorrichtung mit Mähgerät nach der Erfindung schematisch, angenähert maßstäblich dargestellt ist.

Es zeigt:
- Fig. 1 -: Eine Trägervorrichtung mit Rotormäher in Arbeitsstellung in einer Draufsicht.
- Fig. 2 -: Eine Trägervorrichtung mit Rotormäher gemäß Fig. 1 in Arbeitsstellung in einer Seitenansicht.
- Fig. 3 -: Eine Trägervorrichtung mit Trommelmähwerk gemäß Fig. 1 in Transportstellung in einer Draufsicht.
- Fig. 4 -: Eine Trägervorrichtung mit Trommelmähwerk in einer Variante zur Transportstellung in Draufsicht.
- Fig. 5 -: Detail X aus Fig. 2 in vergrößertem Maßstab.
- Fig. 6 -: Detail Y aus Fig. 2 in vergrößertem Maßstab.
- Fig. 7 -: Detail Y gemäß Fig. 6 in einer Draufsicht.

Das Anhängemähwerk nach der Erfindung setzt sich im wesentlichen aus einer Trägervorrichtung (4) mit einem beispielsweise dargestellten Trommelmähwerk (9), die zusammen ein Mähgerät (10) bilden, einer Deichsel (3) und einem Anbaubock (2), der die Verbindung zum Heck eines Traktors (1) herstellt, zusammen. Der Traktor (1) zieht das Anhängemähwerk in Fahrtrichtung (F). Das Anhängemähwerk kann wahlweise in Rechtsauslage oder in Linksauslage hinter dem Traktor (1) gefahren werden, so daß der Traktor (1) nur bereits gemähte Mähschwaden ohne Beschädigung überfährt.

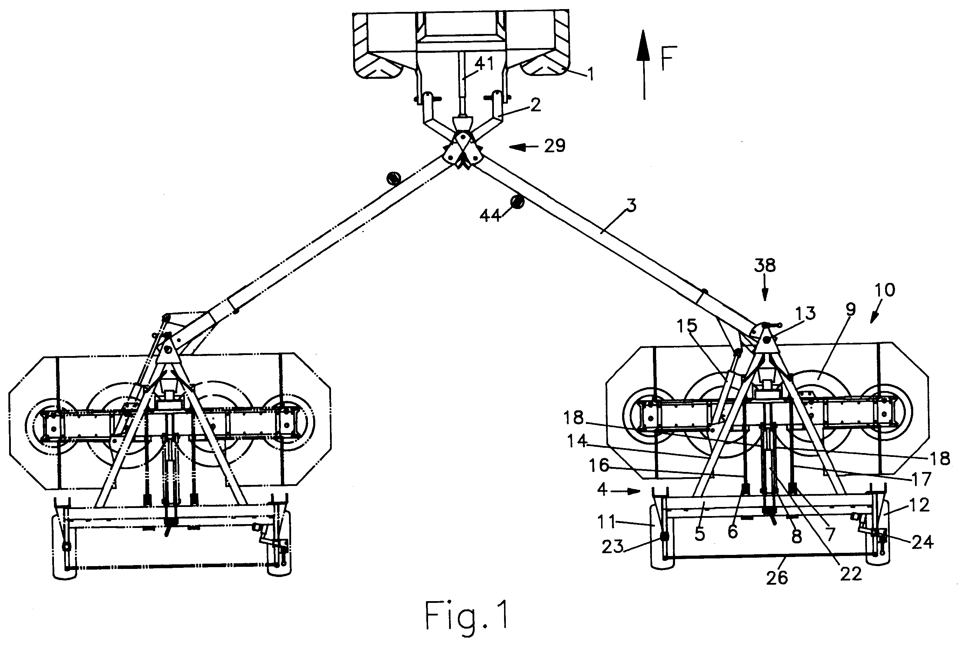

In Fig. 1 ist die Rechtsauslage des Anhängemähwerks dargestellt. Die mögliche Linksauslage ist angedeutet. In den Figuren ist auch die Darstellung von für die Erfindung unwesentlichen Details verzichtet worden.

Als Mähgerät (10) kommen beispielsweise Trommelmähwerke, Scheibenmähwerke, Messermähwerke, Mulchgeräte mit oder ohne Aufbereiter in Frage. Auch können die Grundkomponenten dieser Mähwerke Verwendung finden, die dann durch die weiteren erforderlichen Teile ergänzt werden, damit sie mit der Trägervorrichtung (4) eine Einheit als Anhängemähwerk bilden.

Die Trägervorrichtung (4) besteht im wesentlichen aus dem Tragteil (5), an das seitlich jeweils ein steuerbares Stützrad (11,12) angeschlossen ist und einem Rahmen (14) an dessen vorderem Ende sich eine vertikale Schwenkachse (13) befindet, die die Verbindung zur Deichsel (3) darstellt. Seitlich zwischen Trägervorrichtung (4) und Deichsel (3) ist ein doppelt wirkender hydraulischer Stellzylinder (15) angeordnet, der an die Traktorhydraulik angeschlossen ist und mit dem die seitliche Stellung des Mähgerätes (10) zum Traktor (1) vom Fahrersitz aus einstellbar ist. Auf die Darstellung der Schlauchverbindungen zum Traktor (1) ist verzichtet worden.

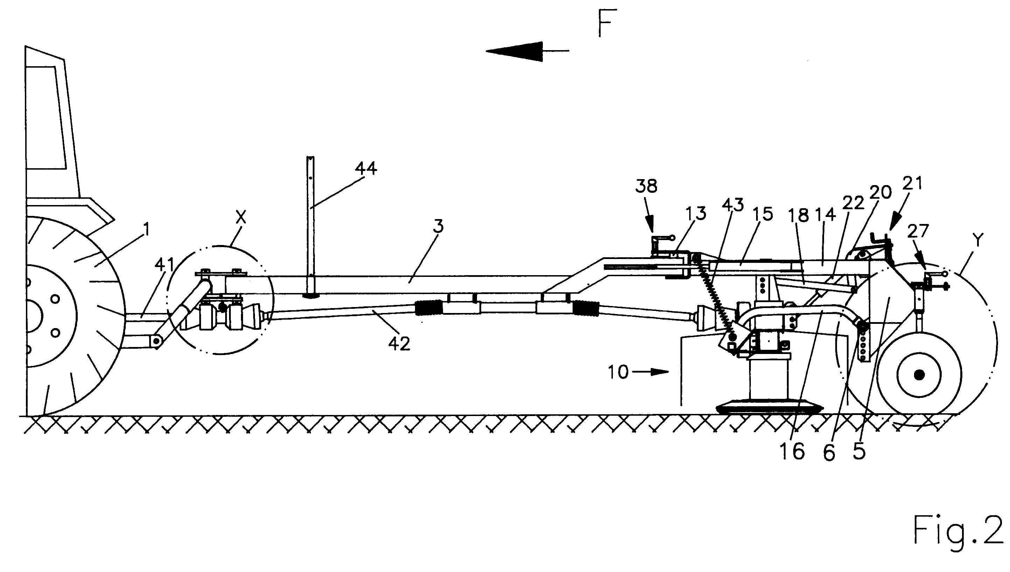

Das Mähgerät (10) wird über die Anschlußteile (6,7,8) an der Trägervorrichtung (4) angelenkt. Die Unterlenker (16,17) und der Oberlenker (18) stellen die Verbindung in der Form eines Dreipunktgestänges dar. Der Oberlenker (18) ist über einen Winkelhebel (20) mit einer Verstelleinrichtung (21) verbunden (Fig. 2). Die Betätigung der Verstellvorrichtung (21) bewirkt eine Winkelverstellung des Mähgerätes zur Erdoberfläche. Sie kann beispielsweise mechanisch durch eine Spindel mit Handkurbel oder auch über ein hydraulischen Stellzylinder ausgeführt sein.

Der hydraulische Stellzylinder (22) ist einerseits mit dem Tragteil (5) und andererseits mit dem Mähgerät (10) verbunden. Die Betätigung vom Traktorsitz aus bewirkt das Anheben des Mähgerätes(10) in die Transportstellung bzw. das Ablassen in die Arbeitstellung.

Die Trägervorrichtung (4) ist im vertikalen Schwenkpunkt (13) mit der Deichsel (3) gelenkig verbunden. Mit einer mechanischen Verriegelung (38) kann der Schwenkung um die Schwenkachse (13) wahlweise verriegelt oder dauerhaft entriegelt sein. Die verriegelte Stellung wird insbesondere als zusätzliche mechanische Sicherung beim Straßentransport verwendet.

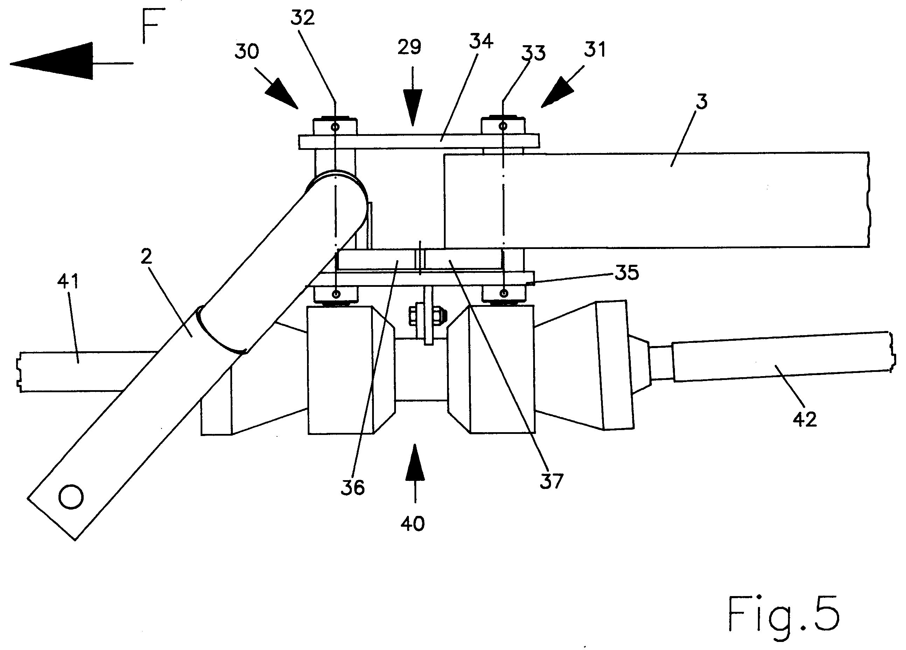

Fig. 5 stellt das Detail X in Fig. 2 in vergrößertem Maßstab dar. Es handelt sich um die Anlenkung (29) mit dem Durchtrieb (40) in einer Seitenansicht.

Die Anlenkung (29) ist am traktorseitigen Ende der Deichsel (3) angeordnet, die die gelenkige Verbindung zwischen Deichsel (3) und Anbaubock (2) herstellt. Die Anlenkung (29) besteht im wesentlichen aus dem vorderen Teilgelenk (30) und dem hinteren Teilgelenk (31) mit der vorderen Achse (32) und der hinteren Achse (33). Verbunden sind die Teilgelenke (30,31) durch die obere Lasche (34) und die untere Lasche (35). Ein vorderes Zahnsegment (36) ist fest mit dem Anbaubock (2) verbunden und schwenkbar um die Achse (32) zwischen den Laschen (34,35) angeordnet. Ein hinteres Zahnsegment (37) ist fest mit der Deichsel (3) verbunden und um die Achse (33) schwenkbar zwischen den Laschen (34,35) angeordnet.

Etwa in der Mitte der unteren Lasche (35) ist ein Durchtrieb (40) lösbar befestigt. Der Durchtrieb (40) besteht im wesentlichen aus der Lagerung einer Durchtriebswelle mit zwei an ihren Enden angeordneten Vielkeilprofilenden und Schutzvorrichtungen. Mit ihnen werden die Gelenkwelle (41) zum Traktor und die Gelenkwelle (42) zum Antrieb des Mähgerätes (10) lösbar verbunden.

Die Zahnsegmente (36,37) bewirken, daß die um die vertikalen Achsen (32,33) schwenkende Lasche (35) und damit der Durchtrieb (40) mit den Gelenkwellenanschlüssen lediglich um die halbe Abwinkelung geschwenkt die die Deichsel (3) zur Fahrtrichtung (F) einnimmt, wenn der Traktor (1) beispielsweise in eine Kurve fährt. Hierdurch wird auf einfachste Weise eine geringere Abwinklung in den Kreuzgelenken der Gelenkwellen (41,42) erreicht und aufwendige Getriebe vermieden.

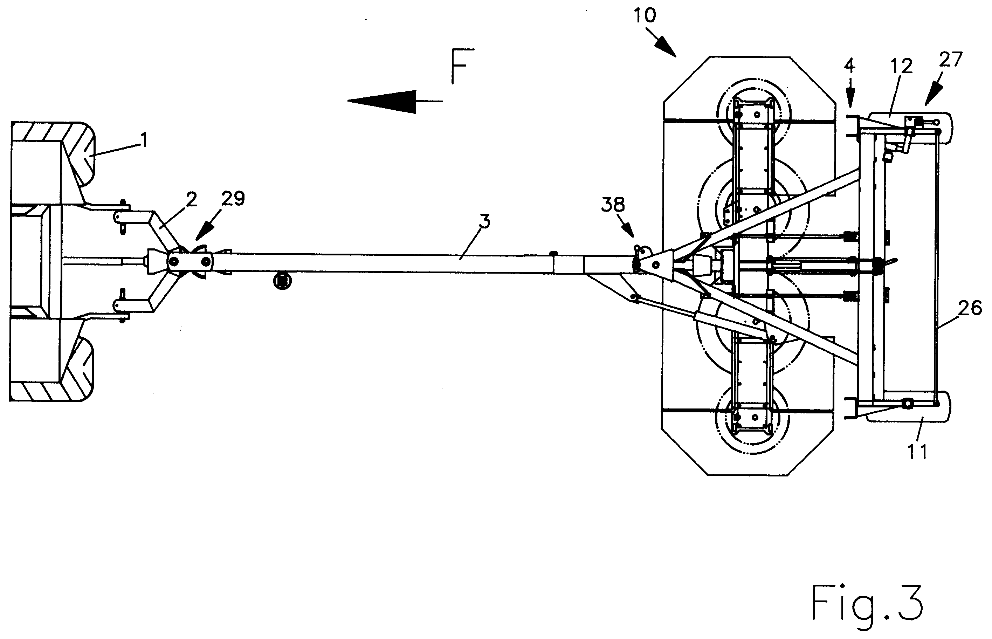

In Fig. 3 ist eine Transportstellung des Anhängemähwerks hinter dem Traktor dargestellt. Durch Betätigung des hydraulischen Stellzylinders (15) wird diese symmetrische Anordnung zur Schlepperlängsachse erreicht.

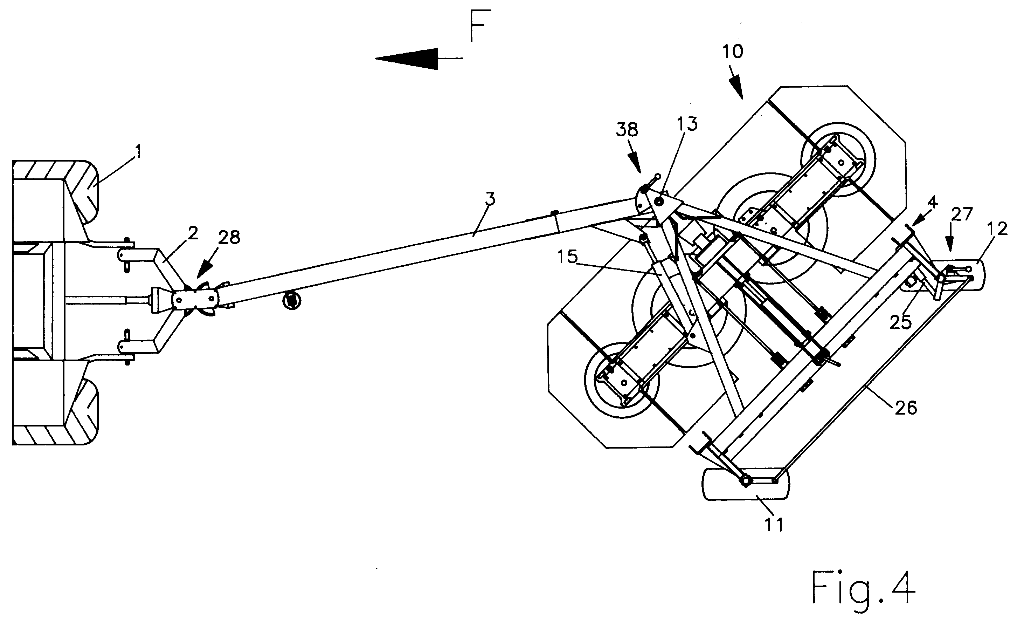

Eine weitere Transportstellung zeigt die Fig. 4. Sie wird insbesondere für Anhängemähwerke mit großer Arbeitsbreite angewendet, da sie durch Verstellen und Verriegeln der Stützräder (11,12) und Betätigung des hydraulischen Stellzylinders (15) die Trägervorrichtung (4) und dem Mähgerät (10) um die vertikale Schwenkachse (13) in eine in Fahrtrichtung (F) besonders schmale Stellung bringbar ist.

Fig. 5 stellt das Detail X in vergrößertem Maßstab dar. Es handelt sich um die Anlenkung (29) mit dem Durchtrieb (40) in einer Seitenansicht gemäß Fig. 2.

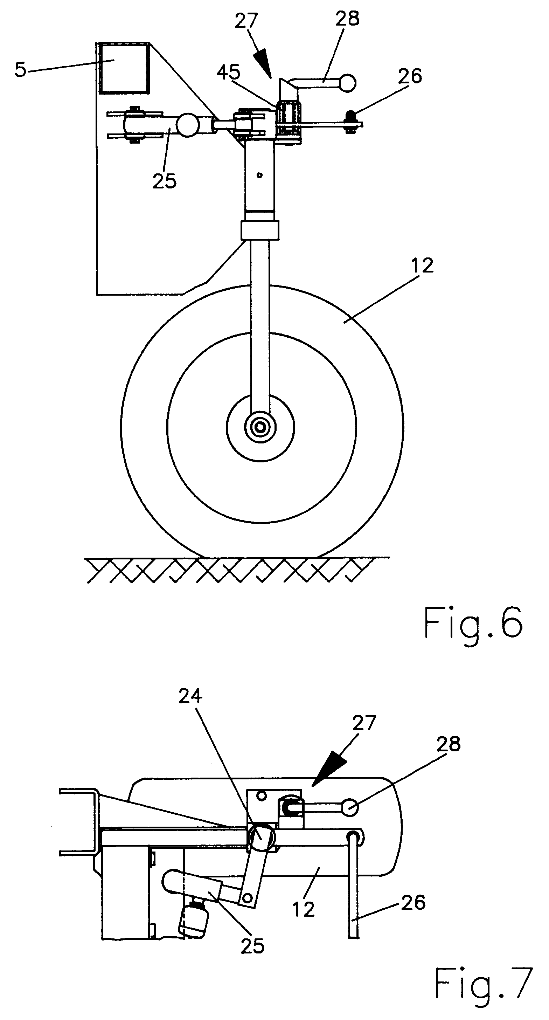

Fig. 6 zeigt das rechte Stützrad (12) in einer vergrößerten Seitenansicht gemäß Fig. 2. Während Fig. 7 das Stützrad (12) gemäß Fig. 6 in einer Draufsicht in vergrößertem Maßstab darstellt.

Die Stützräder (11,12) der Trägervorrichtung (4) sind um Hochachsen (23,24) beispielsweise durch einen einfach wirkenden hydraulischen Stellzylinder (25) mit Hydrospeicher, vom Traktorsitz aus fernsteuerbar und vorzugsweise durch eine Spurstange (26) gekoppelt. Ferner sind sie durch eine mechanische Verriegelung (27), beispielsweise für den Straßentransport, in verschiedenen Stellungen verriegelbar. Die Verriegelung (27) wird zur besseren Bedienbarkeit druch einen Kraftspeicher (45) unterstützt und ist durch das 180°-Schwenken einer Kurbel (28) dauerhaft außer Eingriff bringbar. Dargestellt ist die verriegelte Stellung (Fig. 6).

Die Anlenkung (29) ist durch entsprechende Maßnahmen geschützt, um ein Hineingreifen während des Schwenkvorganges zu verhindern. Beispielsweise können die Zahnsegment (36,37) durch sich überlappende Scheiben abgedeckt sein, so daß der Einlauf der Zahnsegmente (36,37) abgedeckt ist. Ein weiteres, nicht dargestelltes Ausführungsbeispiel für die Sicherung ist das Abdecken durch witterungsbeständige Folien, die an der Lasche (34) befestigt werden und unterhalb der Anlenkung (29) lösbar miteinander verbunden sind.

Wie in Fig. 2 dargstellt, ist das Mähgerät (10) durch ein einstellbaren Kraftspeicher mit dem Rahmen (14) der Trägervorrichtung verbunden. Hierdurch kann ein Teil des Eigengewichtes des Mähgerätes (10) auf die Trägervorrichtung (4) übertragen werden, wodurch die Auflagekräfte der Mähtrommeln auf den Boden verringert und die Grasnarbe geschont wird.

Im vorderen Bereich der Deichsel (3) ist eine höhenverstellbare Abstellstütze (44) angeordnet. Fig. 2 zeigt die verriegelte Stellung während der Arbeit des Anhängemähwerkes.

Wird als Mähgerät (10) ein Frontgerät verwendet, ist nach der Erfindung vorgesehen, daß dieses mit einem Winkelgetriebe mit Durchtrieb vorgesehen ist, so daß es ohne Umrüstung in diesem Bereich in die Trägervorrichtung (4) einbaubar ist.

Nicht dargestellt ist die Verwendung eines Grundmoduls, das sowohl bei einem Frontmähwerk oder einem Heckanbaumähwerk verwendbar ist. Das Modul bewirkt eine wesentliche Kosteneinsparung, da es als Frontmähwerk, Heckanbaumähwerk und in Verbindung mit der Trägervorrichtung (4) ein Anhängemähwerk Verwendung finden kann.

## Patentansprüche

1. Trägervorrichtung für Mähwerke bestehend aus einer Deichsel (3) mit frontseitigem Anbaubock (2) zum Anschluß an einen Traktor (1) und einem Tragteil mit Fahrgestell, dadurch gekennzeichnet, daß die Trägervorrichtung (4) mit einer von einem Front- oder Heckanbau-Mähwerk oder der Grundkomponente eines solchen Mähwerkes gebildeten Mähgerät (10) zu einem Anhängemähwerk zusammenfügbar ist.

2. Trägervorrichtung nach Anspruch 1, dadurch gekennzeichnet, daß der Tragteil (5) mit Anschlußteilen (6,7,8) für den Dreipunktanschluß des Mähgerätes (10) versehen ist.

3. Trägervorrichtung nach Anspruch 1 und 2, dadurch gekennzeichnet, daß das Mähgerät (10) gelenkig mit den unteren Anschlußteilen (6,7) des Tragteils (5) verbunden ist.

4. Trägervorrichtung nach den Ansprüchen 1 bis 3, dadurch gekennzeichnet, daß das Mähgerät (10) relativ zum Tragteil (5) in der Arbeitshöhe einstellbar abgestützt ist.

5. Trägervorrichtung nach Anspruch 4, dadurch gekennzeichnet, daß das Mähgerät (10) zur Arbeitshöhenverstellung stufenlos über einen vom Traktor (1) steuerbaren hydraulischen Stellzylinder (22) um die Schwenkpunkte in den unteren Anschlußteilen (6,7) und der Oberlenker (18) um den Schwenkpunkt in dem oberen Anschlußteil (8) schwenkbar ist.

6. Trägervorrichtung nach den Ansprüchen 1 bis 5, dadurch gekennzeichnet, daß die Trägervorrichtung (4) sich über steuerbare Stützräder (11,12) auf dem Boden abstützt.

7. Trägervorrichtung nach Anspruch 6, dadurch gekennzeichnet, daß die Stützräder (11,12) um Hochachsen (23,24) schwenkbar, feststellbar und entriegelbar angebracht sind.

8. Trägervorrichtung nach den Ansprüchen 6 und 7, dadurch gekennzeichnet, daß die Einstellung der Stützräder (11,12) durch mindestens einen hydraulischen Stellzylinder (25) fernsteuerbar ist.

9. Trägervorrichtung nach den Ansprüche 6 bis 8, dadurch gekennzeichnet, daß die Stützräder (11,12) höheneinstellbar sind.

10. Trägervorrichtung nach den Ansprüchen 1 bis 9, dadurch gekennzeichnet, daß die Deichsel (3) einerseits gelenkig mit der Trägervorrichtung (4) und andererseits gelenkig mit dem Anbaubock (2) verbunden ist.

11. Trägervorrichtung nach Anspruch 10, dadurch gekennzeichnet, daß die Schwenkachse (13) höher als die anbaubockseitige Anlenkung (29) angeordnet ist.

12. Trägervorrichtung nach Anspruch 10, dadurch gekennzeichnet, daß die Schwenkachse (13) durch eine Stellvorrichtung zwischen Deichsel (3) und Trägervorrichtung (4) überbrückt ist.

13. Trägervorrichtung nach Anspruch 12, dadurch gekennzeichnet, daß die Stellvorrichtung aus einem doppeltwirkenden, stufenlos verstellbaren hydraulischen Stellzylinder (15) besteht.

14. Trägervorrichtung nach den Ansprüchen 12 und 13, dadurch gekennzeichnet, daß die Schwenkachse (13) durch eine Verriegelung (38) verriegelbar ist.

15. Trägervorrichtung nach den Ansprüchen 1 bis 14, dadurch gekennzeichnet, daß die anbaubockseitige Anlenkung (29) im wesentlichen aus zwei Teilgelenken (30,31) mit angenähert vertikalen, parallelen Achsen (32,33) besteht, die durch Laschen (34,35) miteinander verbunden sind und durch zwei im Eingriff stehende Zahnsegmente (36,37) gesteuert sind.

16. Trägervorrichtung nach Anspruch 15, dadurch gekennzeichnet, daß das eine Zahnsegment (36) fest mit dem Anbaubock (2) und das andere Zahnsegment (37) fest mit der Deichsel (3) verbunden ist und die Zahnsegmentachsen mit den Achsen (32,33) der Teilgelenke (30,31) zusammenfallen.

17. Trägervorrichtung nach den Ansprüchen 15 und 16, dadurch gekennzeichnet, daß die Zahnsegmente (36,37) durch sich überlappende Scheiben abgedeckt sind.

18. Trägervorrichtung nach den Ansprüchen 15 bis 17, dadurch gekennzeichnet, daß die untere Lasche (35) zwischen den Teilgelenken (30,31) die Lagerung für einen mit Gelenkwellen (41,42) als Antrieb für das Mähgerät (10) verbindbaren Durchtrieb (40) trägt.

19. Trägervorrichtung nach den Ansprüchen 1 bis 18, dadurch gekennzeichnet, daß das in Arbeitsstellung befindliche Mähgerät (10) durch Kraftspeicher (43) entlastbar ist.

20. Trägervorrichtung nach Anspruch 19, dadurch gekennzeichnet, daß die Kraftspeicher (43) einstellbar sind.

21. Trägervorrichtung nach den Ansprüchen 1 bis 20, dadurch gekennzeichnet, daß bei Ausbildung des Mähgerätes (10) als Frontmähwerk, dieses mit einem Winkelgetriebe mit Durchtrieb versehen ist.

22. Trägervorrichtung nach den Ansprüchen 1 bis 20, dadurch gekennzeichnet, daß das Grundmodul eine wahlweise als Teil eines Front- oder Heckanbaumähwerks einsetzbare Ausbildung aufweist.
